# EUROPÄISCHE PATENTSCHRIFT

(11) **EP 4 233 123 B1**
(45) Veröffentlichungstag und Bekanntmachung des Hinweises auf die Patenterteilung: **17.07.2024**
(21) Anmeldenummer: 21797975.6
(22) Anmeldetag: 18.10.2021
(51) Int. Cl.: A62C 3/07, A62C 3/16, F42B 39/14, F42D 5/04, H01M 50/233, H01M 50/249, H01M 50/20

(54) **MOBILE ANLAGE FÜR DIE BEHANDLUNG VON DEFEKTEN AKKUMULATOREN UND BATTERIEN, INSBESONDERE FÜR DIE BEHANDLUNG VON DEFEKTEN LANDFAHRZEUGBATTERIEN**
MOBILE DEVICE FOR THE TREATMENT OF DEFECTIVE ACCUMULTORS AND BATTERIES, IN PARTICULAR FOR THE TREATMENT OF DEFECTIVE ACCUMULTORS USED IN LAND VEHICLES
DISPOSITIF MOBILE POUR LE TRAITEMENT D'ACCUMULATEURS DÉFECTUEUX ET DE BATTERIES, NOTAMMENT POUR LE TRAITEMENT D'ACCUMULATEURS DÉFECTUEUX UTILISÉS DANS DES VÉHICLES TERRESTRES

(30) Priorität: 23.10.2020 IT 202000025144
(43) Veröffentlichungstag der Anmeldung: 30.08.2023
(73) Patentinhaber: Eco-Research, 39100 Bozen (BZ) (IT)
(72) Erfinder: TIRLER, Werner, 39100 Bolzano (IT); VOTO, Giulio, 39100 Bolzano (IT)
(74) Vertreter: Ausserer, Anton
(86) Internationale Anmeldenummer: PCT/EP2021/078753
(87) Internationale Veröffentlichungsnummer: WO 2022/084219

(56) Entgegenhaltungen:
- WO-A1-2012/127291
- WO-A1-2014/016069
- WO-A1-2021/009199
- DE-A1- 102011 080 706
- DE-A1- 102013 210 154
- DE-U1- 202015 102 822

## Beschreibung

Die Erfindung betrifft eine mobile Anlage für die Behandlung von Akkumulatoren, Batterien und dergleichen, insbesondere für die Behandlung von Landfahrzeugbatterien.

Durch den vermehrten Einsatz von wieder aufladbaren Batterien und Akkus stellt sich zunehmend das Problem des Umgangs mit Batterien und Akkus, die in Landfahrzeugen vorhanden sind, insbesondere in Maschinen, die nach einer Panne und/oder einem Unfall nicht mehr funktionieren und von Einsatzkräften wie Feuerwehren behandelt werden müssen. Von diesen Akkumulatoren und/oder Batterien geht eine Explosionsgefahr und damit eine Verletzungsgefahr für die Einsatzkräfte aus.

Nach dem derzeitigen Stand der Technik stellen die Einsatzkräfte entweder die gesamte Fahrzeug in einen Wassertank oder füllen dieses mit Schaum und müssen es dann in einem Tank oder mittels eines Spezialtransports mit den erforderlichen Vorsichtsmaßnahmen transportieren, da das Fahrzeug und die Batterie, d.h. der Akkumulator im Fahrzeug, jederzeit explodieren können, da die chemische Reaktion im Inneren des Akkumulators/der Batterie ablaufen kann, ohne von außen bemerkt zu werden. DE 10 2013 210154 A1, WO 2012/127291 A1, WO 2014/016069 A1 und DE 20 2015 102822 U1 beschreiben derartige Anlagen und Verfahren.

Das erfindungsgemäße System löst das Problem, den Akkumulator/die Batterie vor Ort unschädlich zu machen und dann einen einfachen, sicheren und kostengünstigen Transport z. B. mit einem bekannten Abschleppwagen zu ermöglichen.

Das erfindungsgemäße Verfahren, das in einer erfindungsgemäßen Anlage eingesetzt wird, die in einer wässrigen/feuchten Phase arbeitet, erzeugt keine giftige und potenziell korrosive Dämpfe, was ein kritischer Aspekt ist, der in den zitierten Erfindungen nicht gelöst wird, was aber bedeutet, dass die Phasen, die zur Emission potenziell gefährlicher Stoffe führen können, mit der flüssigen/feuchten Umgebung zur Reaktion gebracht werden.

Das bedeutet, dass das erfindungsgemäße Verfahren unter Umweltgesichtspunkten unbedenklich ist, und zwar sowohl in Bezug auf mögliche Emissionen in die Atmosphäre während der Behandlungsphase als auch in Bezug auf Rückstände potenziell toxischer Substanzen, die möglicherweise die Teile kontaminieren können, die für das Recycling oder den Verkauf als Rohstoffe im Hinblick auf die Entsorgung von Abfällen gemäß der Richtlinie 2008/82/EG bestimmt sind.

Am Ende des in einer erfindungsgemäßen Anlage durchgeführten Prozesses erhält man einen Rückstand, der seine chemische Reaktivität (und Gefährlichkeit) verloren hat und für die Rückgewinnung von in der Batterie vorhandenen Stoffen (z.B. Li, Co, Ni, Mn, andere Metalle und auch Fluor) durch hydrometallurgische Mittel bestimmt werden kann.

Unter Batterien werden in der vorliegenden Beschreibung alle Batterien, Akkumulatoren, elektrisch aufladbaren Zellen und alle Mittel verstanden, die zur Speicherung elektrischer Energie dienen.

Zweck der vorliegenden Erfindung ist es, Akkumulatoren und Batterien vor Ort unschädlich zu machen, um einen sicheren und schnellen Abtransport von Akkumulatoren und Batterien und/oder von Landfahrzeugen mit diesen Akkumulatoren zu ermöglichen. Dieser Zweck wird durch eine mobile Anlage nach dem kennzeichnenden Teil des Anspruchs 1 erreicht.

Es wird eine auf einem gezogenen und/oder selbstfahrenden Fahrzeug angeordnete Anlage vorgeschlagen, die mindestens einen vorzugsweise zylindrischen Behälter umfasst, wobei der Behälter eine Tür für den Zugang zum Innenraum und einen Wasserzulauf und/oder -ablauf aufweist. Dieser umfasst außerdem mindestens ein Element/Gerät zur Erwärmung des Wassers.

In dem erfindungsgemäßen System wird das folgende Verfahren durchgeführt, das aus den folgenden Schritten besteht:
- Einführen eines Akkumulators, einer Batterie, einer Zelle, die Lithium, Natrium-Lithium-Ionen, Kalium und/oder Nickel enthalten kann, in eine Kammer/Reaktor und/oder ein Fahrzeug mit einem Akkumulator, einer Batterie und/oder einer Zelle,
- entmineralisiertes Wasser (H2O) oder sogar normales industrielles Leitungswasser hinzufügen,
- die Tür schließen und
- alles auf eine Temperatur von über 100 °C und unter 370 °C bei einem Druck zwischen 2 und 40 bar bringen.

Vorteilhafterweise erfolgt die Wasserversorgung vor Ort, zum Beispiel durch die Feuerwehr.

In einer bevorzugten Ausführungsform umfasst das System einen Gasauslass, und in einer besonders bevorzugten Ausführungsform ist dieser Auslass mit einem Aktivkohlefilter ausgestattet. Vorteilhafterweise verfügt das Fahrzeug, auf dem sich das erfindungsgemäße System befindet, über eine Rampe, um ein Fahrzeug mit einer Batterie und/oder einem Akkumulator in den Behälter einzuführen.

Vorteilhafterweise kann ein Abschleppsystem vorgesehen werden, z.B. ein von Pannenhilfsfahrzeugen bekanntes Abschleppsystem, das an der Anlage montiert wird, um die Batterie, den Akkumulator oder die Zelle mit dem Fahrzeug oder ohne Fahrzeug direkt in den Behälter zu schleppen, in dem die Reaktion stattfindet. Auf diese Weise wird das Fahrzeug und/oder die Batterie, der Akkumulator oder die Zelle in den Behälter geschleppt, ohne den Bediener zu gefährden.

Nachdem die zu behandelnden Batterien, Akkumulatoren oder das Fahrzeug mit den Batterien, Akkumulatoren in den Reaktor eingeführt wurden, wird Wasser hinzugefügt und die Temperatur für die hydrothermische Behandlung erhöht. In vorteilhafter Weise wird die Temperatur auf ca. 200 °C - 220 °C erhöht. Unter diesen Betriebsbedingungen baut sich der Separator zwischen Anode und Kathode ab, die Batterie schließt sich kurz und verliert ihre elektrische Restladung, was zu einer exothermen Reaktion mit einem entsprechenden Temperatur- und Druckanstieg in der Kammer (Reaktor) führt. Das in der Batterie enthaltene aktive Material (z. B. Lithium) hydrolysiert schnell und bildet Verbindungen, die nicht mehr gefährlich sind. Das Vorhandensein von H2O, d. h. die feuchte Umgebung, begrenzt den Temperaturanstieg im Batteriekörper, was zu einer Zersetzung der Kunststoffteile führen könnte. Die feuchte Umgebung dämpft Temperaturschwankungen und bindet darüber hinaus die aggressiven Stoffe, die aus der Batterie freigesetzt werden. Auf diese Weise können gefährliche chemische Reaktionen und die Freisetzung giftiger Gase vermieden werden.

Für alle diese Vorgänge wird Wasser benötigt, das dem Reaktor in ausreichender Menge zugeführt werden muss. Die Wassermenge im Verhältnis zu den zu behandelnden Batterien/Akkumulatoren liegt vorzugsweise in einem Gewichtsverhältnis von 1/1 bis 10/1.

Am Ende des Prozesses wird die Kammer/der Reaktor abgekühlt und die Materialien, insbesondere Kobalt, Magnesium, Eisen, Aluminium und Lithium, können durch Hydrometallurgie zurückgewonnen werden. Dieses Verfahren ermöglicht auch ein einfaches und sicheres späteres Recycling, da es keine gefährlichen exothermen und/oder chemischen Reaktionen gibt, die für Menschen gefährlich sein könnten. Da außerdem keine giftigen Gase mehr vorhanden sind, müssen die Kammern/Reaktorkammern, in denen die Recyclingprozesse stattfinden, keine strengen Protokolle einhalten und müssen nicht mit Abgasreinigungssystemen ausgestattet sein, um gefährliche Gase aus den Abgasen zu entfernen. Außerdem können auf diese Weise behandelte Batterien, Akkumulatoren und dergleichen nach der Behandlung sicher transportiert werden. Dies ist ein erheblicher Vorteil, da beispielsweise die Batterien von Elektroautos ebenfalls sehr groß sind und zur Vermeidung von Risiken beim Transport in speziellen Behältern untergebracht werden müssen, die eventuellen exothermen Reaktionen standhalten können.

Daher wäre die Beförderung solcher Batterien ohne Behandlung sehr sperrig und kostspielig.

Eine Batterie bzw. ein Akkumulator, die bzw. der in einer Anlage nach dem erfindungsgemäßen Verfahren behandelt wurde, weist diese Probleme nicht mehr auf und kann leicht und wirtschaftlich transportiert werden. Darüber hinaus werden aufgrund der relativ niedrigen Temperaturen und Druck, die verwendet werden, viele Risiken, die typischerweise bei thermischen Zerstörungsverfahren auftreten, eliminiert. In einer bevorzugten Ausführungsform wird die Reaktionskammer/der Reaktionsbehälter vor dem Einlegen der zu behandelnden Batterien mit einem Inertgas gespült, um mögliche Reaktionen mit der Luft oder anderen vorhandenen Gasen, insbesondere mit Sauerstoff, zu vermeiden.

Um das ordnungsgemäße Funktionieren des erfindungsgemäßen Verfahrens zu gewährleisten, muss H2O vorteilhafterweise zwischen dem 1- und 10-fachen des Gewichts der zu inertisierenden Batterien, Akkumulatoren und dergleichen zugesetzt werden. Die Menge des hinzuzufügenden H2O hängt auch von der Art der zu inertisierenden Batterien und Akkumulatoren ab. Aus Sicherheitsgründen ist mehr H2O erforderlich, wenn sich in den Batterien Stoffe befinden, die Flusssäure oder Salzsäure freisetzen können. Diese Säuren sind besonders gefährlich, wenn sie gasförmig sind. Daher reagieren sie, wenn genügend H2O vorhanden ist, zu einer wässrigen Lösung: z. B. H3O+ F- oder H3O+Cl-. In wässriger Form sind diese chemischen Spezies leicht zu handhaben, und durch Zugabe einer Base zur Korrektur des pH-Werts werden sie sogar noch weniger gefährlich/inert.

Ein Beispiel für ein erfindungsgemäßes System wird nachstehend in nicht begrenzender Weise anhand einer beigefügten Abbildung beschrieben. Es zeigen
Figur 1 eine schematische perspektivische Ansicht einer erfindungsgemäßen Anlage und
Figur 2 eine schematische Rückansicht einer erfindungsgemäßen Anlage .

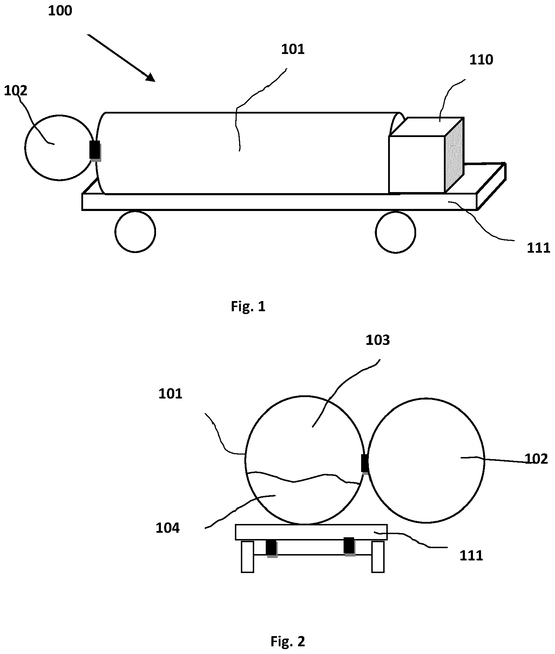

Figur 1 zeigt mit der Bezugsziffer 100 eine mobile Anlage, die auf einem mobilen Fahrzeug, z.B. einem Lastwagen oder einem Anhänger, angeordnet ist, wobei auf einer Plattform, z.B. einem Anhänger 111, ein Behälter 101 angeordnet ist, in dem das Verfahren zur Inertisierung einer Batterie, eines Akkumulators, einer Zelle und/oder eines Fahrzeugs mit einer Batterie, einem Akkumulator, einer Zelle durchgeführt wird.

Der Behälter 101 hat beispielsweise eine zylindrische, rohrförmige Form und verfügt über mindestens eine Tür 102 für den Zugang zum Innenbereich des Behälters 101. Vorteilhafterweise umfasst das erfindungsgemäße System 100 eine nicht dargestellte Rampe, die einen einfachen Zugang für die Batterie, den Akkumulator oder das Fahrzeug in den Innenraum des Behälters ermöglicht. Vorteilhafterweise ist auch innerhalb des Behälters 101 und/oder in Verbindung mit der erfindungsgemäßen Anlage eine Zug- und/oder Ziehvorrichtung, beispielsweise eine Anhängerkupplung oder dergleichen, angeordnet, um die Batterie, den Akkumulator und/oder das Fahrzeug zu schleppen und die Batterie, den Akkumulator innerhalb des Behälters 101 aufzunehmen. Vorteilhafterweise schleppt die Vorrichtung die Batterie oder das Fahrzeug in den Innenraum 103 des auf der Plattform 101 eines Anhängers, LKWs o.ä. angeordneten Behälters 101.

Das erfindungsgemäße System 100 umfasst Elemente 110 zur Beheizung der Umgebung innerhalb des Behälters 101. Er kann ferner Mittel zum Einleiten von Inertgas in das Innere des Behälters 101 und/oder Mittel zum Ansaugen von Luft und dergleichen aus der Kammer 103 des Behälters 101 in das Innere umfassen.

In den Innenraum 103 wird der Behälter101 geschleppt und/oder die Batterie, der Akkumulator oder das diese enthaltende Fahrzeug gebracht und dann die Tür 102 geschlossen. Nach dem Schließen der Tür wird Wasser hinzugefügt.

Vorteilhafterweise wird die Wassermenge H2O entsprechend der Masse der zu inertisierenden Batterie, des Akkus, der Ladezelle und dergleichen bestimmt. Damit während des Behandlungsprozesses ausreichend H2O 104 zur Verfügung steht, wird das 1 bis 10-fache Gewicht der Masse der zu behandelnden Batterie in Wasser zugegeben. Reaktive Chemikalien, z. B. Salzsäure und Flusssäure, werden durch Wasserdampf und flüssiges Wasser gebunden. Diese chemischen Stoffe verbinden sich mit Wasser und bilden wässrige Lösungen, die leichter zu handhaben sind und weit weniger Probleme verursachen als die Gase dieser Stoffe.

Der Inhalt des Behälters 101 wird im Inneren des Behälters 101 erhitzt, indem die Temperatur auf 120 bis 370 °C gebracht wird. Der Druck im Inneren des Behälters 101, der zum Reaktor wird, erreicht je nach Temperatur zwischen 2 und 250 bar. Vorteilhaft ist, dass die Temperatur unter 250°C und der Druck unter 40 bar gehalten wird.

Bei einer Temperatur von ca. 220°C und einem Druck von ca. 25 bar für die meisten Batterien, Akkumulatoren, Ladezelle und dergleichen im Behälter 101 angekommen, kollabiert die Membran und/oder der Separator zwischen Anode und Kathode und führt zu einem Kurzschluss der Batterie, des Akkumulators, der Ladezelle. Dieser Kurzschluss führt auch zu einem Anstieg der Temperatur. Als Produkte der Reaktion zwischen Batterien/Akkumulatoren und Wasser können unter den oben genannten Bedingungen Wasserstoff (H2), leichte Kohlenwasserstoffe, CO2 und CO entstehen, deren Gehalt ebenfalls je nach Ladezustand der Batterien/Akkumulatoren variiert.

Je stärker die zu behandelnden Batterien geladen sind, desto mehr H2 und leichte Kohlenwasserstoffe können entstehen. Es ist möglich, die entwickelten Gase durch die Rückgewinnung von Wasserstoff (H2) zu nutzen oder z. B. eine Wärmekraftmaschine mit den entwickelten Gasen zur Stromerzeugung anzutreiben.

Zur Stabilisierung der Reaktion im Reaktor können Säuren oder Basen zugegeben werden, um den pH-Wert zu regulieren.

Der Behälter 101 kann ferner einen Auslass für z. B. H2 aufweisen, das vorteilhafterweise mit Luft gemischt wird, um es unschädlich zu machen, bevor das Gas in die Atmosphäre entlassen wird. Vorteilhafterweise kann der Auspuff mit einem Aktivkohlefilter ausgestattet sein, um das Entweichen schädlicher Gase zu verhindern.

Das erfindungsgemäße System kann bereits ausreichend Wasser mitführen oder mittels eines kleinen externen z.B. Feuerwehrautos und/oder mittels Hydranten und dergleichen versorgt werden.

Das Verfahren umfasst die folgenden Schritte:
- Einlegen einer Batterie, eines Akkumulators, einer Zelle oder eines Fahrzeugs, das eine Batterie, einen Akkumulator, eine Zelle enthält, in einen Behälter (Reaktor) 101,

Schließen derTür 102 ,
H20 in das Innere der Kammer 103 einbringen,
vorteilhafterweise ein Inertgas und/oder Luft in die Kammer 102 einleiten,
den Inhalt der Kammer auf einen Druck zwischen 2-40 bar und eine Temperatur von mindestens 100° und unter 370°C bringen.

### Liste der Bezugsziffern

- 100: erfindungsgemäße Anlage
- 101: Behälter
- 102: Tür
- 103: innere Kammer
- 104: H2O
- 110: Heizelemente
- 111: Plattform

## Patentansprüche

1. Mobile Anlage (100) zum Behandeln eines Akkumulators, einer Batterie, einer Zelle und/oder eines Fahrzeugs, das einen Akkumulator, eine Batterie, eine Zelle umfasst, **dadurch gekennzeichnet, dass** sie auf einem mobilen Fahrzeug, z.B. einem Lastwagen, einem Anhänger, angeordnet ist, wobei die Anlage mindestens einen Behälter/Reaktor (101) umfasst, in dem der Druck von 2 auf 40 bar erhöht werden kann, und wobei der Behälter mindestens eine Tür (102) zum hermetischen Öffnen und Schließen des Behälters/Reaktors (101), ein Heizelement/eine Vorrichtung zum Erhöhen der Temperatur im Inneren des Behälters auf mindestens 100°C und mindestens eine H2O-Versorgung umfasst.

2. Mobile Behandlungsanlage (100) nach dem vorherigen Anspruch, **dadurch gekennzeichnet, dass** sie mindestens eine Vorrichtung zum Ziehen einer Batterie, eines Akkumulators, einer Zelle oder eines Fahrzeugs, das eine Batterie, einen Akkumulator, eine Zelle enthält, in einen Behälter (Reaktor) (101) umfasst.

3. Mobile Behandlungsanlage (100) nach einem der vorhergehenden Ansprüche, **dadurch gekennzeichnet, dass** sie mindestens eine Rampe für den Zugang zum Behälter (101) aufweist.

4. Mobile Behandlungsanlage (100) nach einem der vorhergehenden Ansprüche, **dadurch gekennzeichnet, dass** der Behälter eine im Wesentlichen zylindrische Form aufweist.

5. Mobile Aufbereitungsanlage (100) nach einem der vorhergehenden Ansprüche, **dadurch gekennzeichnet, dass** die Anlage (100) auf einem mobilen Fahrzeug, beispielsweise einem LKW oder einem Anhänger, angeordnet ist.

6. Verfahren unter Verwendung einer mobilen Anlage nach einem der vorhergehenden Ansprüche, bei dem die folgenden Schritte durchgeführt werden:
- Einlegen einer Batterie, eines Akkumulators, einer Zelle oder eines Fahrzeugs, das eine Batterie, einen Akkumulator, eine Zelle enthält, in einen Behälter (Reaktor) (101),
- Schließen Sie die Tür (102),
- H₂0 (104) in die Kammer (103) einführen,
- den Inhalt der Kammer (103) auf einen Druck von 2-40 bar und eine Temperatur von mindestens 100°C und weniger als 370°C bringen.

7. Verfahren nach Anspruch 6, **dadurch gekennzeichnet, dass**, bevor der Inhalt der Kammer (103) auf einen Druck zwischen 2-40 bar und eine Temperatur von mindestens 100°C und unter 370°C gebracht wird, ein Inertgas eingeleitet und/oder Luft in die Kammer (103) gesaugt wird.

## Claims

1. Mobile system (100) for treating an accumulator, a battery, a cell and/or a vehicle comprising an accumulator, a battery, a cell, **characterized in that** it is arranged on a mobile vehicle, e.g. a truck, a trailer, the system comprising at least one container/reactor (101) in which the pressure can be increased from 2 to 40 bar, and the container having at least one door (102) for hermetically opening and closing the container/reactor (101), a heating element/device for raising the temperature inside the container to at least 100°C and at least one H2O supply.

2. Mobile treatment system (100) according to the preceding claim, **characterized in that** it comprises at least one device for pulling a battery, an accumulator, a cell or a vehicle containing a battery, an accumulator, a cell into a container (reactor) (101).

3. Mobile treatment system (100) according to any of the preceding claims, **characterized in that** it comprises at least one ramp for accessing the container (101).

4. Mobile treatment system (100) according to any of the preceding claims, **characterized in that** the container has a substantially cylindrical shape.

5. Mobile treatment system (100) according to any of the preceding claims, **characterized in that** the system (100) is arranged on a mobile vehicle, for example a truck or a trailer.

6. Method using a mobile system according to any of the preceding claims, in which the following steps are carried out:
- Inserting a battery, an accumulator, a cell or a vehicle containing a battery, an accumulator, a cell into a container (reactor) (101,
- Closing the door (102),
- Inserting H₂0 (104) into the chamber (103),
- bringing the contents of the chamber (103) to a pressure of 2-40 bar and a temperature of at least 100°C and less than 370°C.

7. Method according to Claim 6, **characterized in that** before the contents of the chamber (103) are brought to a pressure of between 2-40 bar and a temperature of at least 100°C and below 370°C, an inert gas is introduced into the chamber (103) and/or air is sucked into the chamber (103).

## Revendications

1. Installation mobile (100) pour le traitement d'un accumulateur, d'une batterie, d'une cellule et/ou d'un véhicule comprenant un accumulateur, une batterie, une cellule, **caractérisée en ce qu'**elle est montée sur un véhicule mobile, par exemple un camion, un camion-remorque ou un camion-benne, un camion, une remorque, ladite installation comprenant au moins une cuve/réacteur (101) dans lequel la pression peut être augmentée de 2 à 40 bars, et ladite cuve comprenant au moins une porte (102) pour ouvrir et fermer hermétiquement ladite cuve/réacteur (101), un élément chauffant/dispositif pour augmenter la température à l'intérieur de ladite cuve à au moins 100°C et au moins une alimentation en H2O.

2. Installation mobile de traitement (100) selon la revendication précédente, **caractérisée en ce qu'**elle comprend au moins un dispositif de traction d'une batterie, d'un accumulateur, d'une pile ou d'un véhicule contenant une batterie, un accumulateur, une pile, dans une cuve (réacteur) (101).

3. Installation mobile de traitement (100) selon l'une quelconque des revendications précédentes, **caractérisée en ce qu'**elle comporte au moins une rampe d'accès à la cuve (101).

4. Installation mobile de traitement (100) selon l'une quelconque des revendications précédentes, **caractérisée en ce que** la cuve présente une forme sensiblement cylindrique.

5. Installation mobile de traitement (100) selon l'une quelconque des revendications précédentes, **caractérisée en ce que** l'installation (100) est disposée sur un véhicule mobile, par exemple un camion ou une remorque.

6. Procédé utilisant une installation mobile selon l'une des revendications précédentes, dans lequel on réalise les étapes suivantes:
- introduire une batterie, un accumulateur, une cellule ou un véhicule contenant une batterie, un accumulateur, une cellule dans un conteneur (réacteur) (101),
- Fermer la porte (102),
- introduire H20 (104) dans la chambre (103),
- amener le contenu de la chambre (103) à une pression de 2 à 40 bars et à une température d'au moins 100°C et inférieure à 370°C.

7. Procédé selon la revendication 6, **caractérisé en ce que**, avant d'amener le contenu de la chambre (103) à une pression comprise entre 2-40 bar et une température d'au moins 100°C et inférieure à 370°C, on introduit un gaz inerte et/ou on aspire de l'air dans la chambre (103).
